# EUROPÄISCHE PATENTSCHRIFT

(11) **EP 2 353 472 B1**
(45) Veröffentlichungstag und Bekanntmachung des Hinweises auf die Patenterteilung: **21.11.2018**
(21) Anmeldenummer: 11000855.4
(22) Anmeldetag: 03.02.2011
(51) Int. Cl.: A47J 31/44, A47J 31/46, A47J 31/60

(54) **Kaffeemaschine mit einer Schäumvorrichtung und Mitteln zum Reinigen der Schäumvorrichtung**
Coffee machine with foaming device and means for cleaning the foaming device
Machine à café dotée d'un dispositif de moussage et de moyens de nettoyage du dispositif de moussage

(30) Priorität: 05.02.2010 DE 102010007143
(43) Veröffentlichungstag der Anmeldung: 10.08.2011
(73) Patentinhaber: Eugster/Frismag AG, 8580 Amriswil (CH)
(72) Erfinder: Riessbeck, Wolfgang, 8597 Landschlacht (CH); Peyrot, Pascal, 9402 Mörschwil (CH)
(74) Vertreter: Patentanwälte Behrmann Wagner PartG mbB

(56) Entgegenhaltungen:
- EP-A1- 1 561 407
- EP-A1- 1 797 801
- EP-A1- 1 911 382
- DE-A1- 3 838 235
- DE-U1-202007 008 813
- DE-U1-202008 016 400

## Beschreibung

Die Erfindung betrifft eine Kaffeemaschine, insbesondere einen Espressovollautomaten, mit einer Schäumvorrichtung nach dem Oberbegriff des Anspruchs 1.

Ein Aspekt der Erfindung betrifft ein Verfahren zum Spülen einer an eine Schäumvorrichtung, insbesondere einer Kaffeemaschine angeschlossene Milchansaugleitung nach dem Oberbegriff des Anspruchs 9.

Aus der Praxis sind Kaffeemaschinen, insbesondere Espressovollautomaten, mit einer Schäumvorrichtung bekannt, in der ein innerer Milchkanal zu einer Schäumkammer führt, wobei in den Milchkanal eine äußere bewegliche Milchansaugleitung, in der Regel ein Schlauch, angeschlossen ist, dessen Ansaugende mit einem Milchvorratsbehälter fluidleitend verbunden ist, insbesondere eingesteckt ist. Der Milchvorratsbehälter kann eine Milchpackung aus Karton sein.

Aus hygienischen Gründen ist es erwünscht, die milchführenden Teile der Schäumvorrichtung und die Milchansaugleitung in nicht zu großen Zeitabständen zu reinigen. Zu diesem Zweck wird in der Regel heißes Spülwasser oder ein Dampfstoß in die Schäumkammer eingeleitet, die damit gegebenenfalls zusammen mit dem inneren Milchkanal gereinigt wird. Das verbrauchte Spülwasser kann in eine äußere Spülwasseraufnahme der Kaffeemaschine eingeleitet und gesammelt werden, wozu die Kaffeemaschine eine Restwasserschale aufweist.

Um die Milchansaugleitung ebenfalls mit Spülwasser zu reinigen, bedarf es jedoch besonderer Maßnahmen:
Hierzu ist in einer Kaffeemaschine mit einem Heißwasser- und/oder Dampferzeuger, der mit einem Heißwasser- und/oder Dampfauslass und mit einer Aufschäumeinrichtung für Milch verbunden ist, die zwischen einer Ausgabeeinrichtung und einem Milchvorratsbehälter angeordnet ist, wobei eine Zufuhrleitung für Milch zur Aufschäumeinrichtung vorgesehen ist, die mit ihrem Einlassende bzw. Milchansaugende lösbar mit dem Vorratsbehälter verbunden ist, eine Reinigungseinrichtung für die Zufuhrleitung vorgesehen, die den Heißwasser- und/oder Dampfauslass und eine Anschlussleitung zum lösbaren Anschließen des Einlassendes bzw. Milchansaugendes der Zufuhrleitung an dem Heißwasser- und/oder Dampfauslass enthält (EP 1 797 801 A1). Das Reinigen der Zufuhrleitung bzw. Milchansaugleitung erfolgt in der Weise, dass das Einlassende bzw. Milchansaugende der Zufuhrleitung zum Reinigen von dem Vorratsbehälter gelöst wird, um mit dem Heißwasser- und/oder Dampfauslass verbunden zu werden, wonach eine Heißwasser- und/oder Dampfausgabe in die Zufuhrleitung bewirkt wird. Nach dem Reinigen mit Heißwasser kann aus der Zufuhrleitung Restheißwasser ausgespült oder abgesaugt oder in anderer Weise ausgetrieben werden. Bei dieser Kaffeemaschine ist unter anderem nachteilig, dass zum lösbaren Anschließen des Einlassendes bzw. Milchansaugendes der Zufuhrleitung an dem Heißwasser- und/oder Dampfauslass hochwertige Ankopplungsglieder sowohl auf Seiten des Heißwasser- und/oder Dampfauslasses als auch an dem Milchansaugende der Zufuhrleitung erforderlich sind, die bei dem Reinigungs- bzw. Spülvorgang mit dem in dem Heißwasser- und/oder Dampfauslass herrschenden Druck und der dortigen Temperatur beaufschlagt werden. Deswegen ist auch das Verbinden der Ankopplungsglieder vor Aktivierung des Heißwasser- und/oder Dampfauslasses sorgfältig durchzuführen. Je nach Gestaltung der Ankopplungsglieder kann das Äußere wenigstens eines der beiden verbundenen Ankopplungsglieder bei dem Reinigungsvorgang der Zufuhrleitung bzw. der Milchansaugleitung ungespült bleiben.

Ferner steht eine Schutz-/Reinigungseinrichtung für einen Getränkeautomaten mit einer komplementär zu einer zumindest einen Zuführkanal umfassenden Anschlusskonfiguration des Getränkeautomaten, insbesondere Kaffeevollautomaten, ausgebildeten Anschlusskonfiguration, die anstelle einer Vorrichtung zum Mischen von Luft, Dampf und Milch insbesondere anstelle eines Milchaufschäumers dicht mit dem Getränkeautomaten verbunden werden kann (DE 10 2008 014 884 A1). Die Leitungsführung ist in der Schutz-/Reinigungseinrichtung so gestaltet, dass bei deren Betrieb zumindest ein mit Milch verunreinigter Anschlussstutzen der getränkeautomatenseitigen Anschlusskonfiguration mittels aus dem Zuführkanal austretendem Reinigungsmedium gereinigt werden kann. Ein Auslassstutzen der Schutz-/ Reinigungseinrichtung kann zum Anschluss eines Milchansaugschlauches ausgebildet sein, so dass bei Betrieb der Schutz-/Reinigungseinrichtung die getränkeautomatenseitige Anschlusskonfiguration zusammen mit dem Milchansaugschlauch gereinigt werden kann. Diese Schutz-/Reinigungs-einrichtung stellt somit ein gesondertes Teil dar, welches passgenau gefertigt sein muss, um auf die Anschlusskonfiguration des Getränkeautomaten zu passen. Die Handhabung der Schutz-/Reinigungseinrichtung ist umständlich, die außerdem selbst eine Reinigung erfordert, beispielsweise in einer Spülmaschine.

Ähnliche Nachteile weist eine zum Stand der Technik gehörende Spül-/Reinigungseinrichtung auf, die zumindest auf einen Heißwasserausgabekanal eines Milchaufschäumers aufgesteckt bzw. angeschlossen werden kann und beim Betrieb des Milchaufschäumers mit aufgesteckter Spül-/Reinigungs-einrichtung ein Rückspülen des Milchaufschäumers, insbesondere der im bestimmungsgemäßen Betrieb mit Milch bzw. mit Milchschaum in Berührung kommenden Bereiche des Milchaufschäumers, bewirkt (DE 10 2008 014 886 A1). Die Spül-/Reini-gungseinrichtung kann einen separaten Kanalabschnitt aufweisen, der in/auf einen Milcheinlasskanal oder auf einen Milchansaugschlauch/-rohr ein- oder aufgesteckt werden kann, wodurch der Milchansaugschlauch ebenfalls rückgespült bzw. gereinigt wird.

Aus der EP 1 561 407 A1 ist eine Vorrichtung zum Erzeugen von Milchschaum, insbesondere in Verbindung mit einer automatischen Kaffeemaschine bekannt, wobei die Vorrichtung eine Mischkammer aufweist, der über Zuführleitungen Milch, Luft und Spülmedium zugeführt werden kann. Dabei wird das Spülmittel zumindest teilweise über die Milchzuführleitung zugeführt. Um nicht nur die unmittelbar mit Milch beaufschlagte Leitung, sondern auch die Luftzuführleitung zu spülen, kann die Luftzuführleitung zumindest mit ihrem an die Mischkammer angeschlossenen Endabschnitt über ein Ventil wahlweise an eine Leitung mit Spülmedium angeschlossen werden. Dieser Maßnahme liegt die Erkenntnis zugrunde, dass bei der Milchaufschäumung der Schaum aus der Mischkammer in die Luftzuführleitung eindringen kann. Die oben erwähnte, unmittelbar mit Milch beaufschlagte Milchzuführleitung, bzw. zu spülende Abschnitte dieser Leitung werden jedoch nicht über die Luftzuführleitung mit Spülmedium beaufschlagt, sondern über ein Rückschlagventil, eine separate Spülleitung und einen Spülleitungsanschluss.

Das Dokument DE 20 2008 016 400 U1 offenbart eine Getränkezubereitungseinheit, insbesondere einer Espressomaschine mit einem Durchlauferhitzer, der zur Bereitung eines Getränks und Milchschaums verwendet wird. Hierzu dient auch eine Mehrwegeventilanordnung, die weiterhin eine Kaltwasserspülung milchführender Leitungen bzw. Strömungswege oder eine Belüftung, d.h. ein Leerlaufen dieser Wege gestattet. Die Mehrwegeventilanordnung kann von einer programmierbaren Steuerung gesteuert werden.

Das Dokument DE 38 38 235 A1 offenbart ein Verfahren zum Spülen einer an einen Dampf-Flüssigkeitsmischer bzw. eine Schäumvorrichtung angeschlossenen beweglichen Milchansaugleitung mit einem Saugrohr bzw. Milchansaugende, das zur Milchschaumbereitung in einen Milchvorratsbehälter eingesteckt ist und zum Spülen aus dem Vorratsbehälter herausgenommen wird und mit einer Abwasserleitung oder dergleichen als Spülwasseraufnahme verbunden wird. Anschließend wird ein Ventil an einem Saugstutzen einer Pumpe stromabwärts des Dampf-Flüssigkeits-mischers geöffnet, so dass reines, gegebenenfalls warmes, aus einer Wasserleitung kommendes Spülwasser in Gegenstromrichtung durch die Saugleitung, die mit dem Saugstutzen in Verbindung steht, und das Saugrohr geleitet wird. Außerdem strömt das Spülwasser in Gleichstromrichtung durch die Pumpe und den Dampf-Flüssigkeitsmischer, so dass die ganze Vorrichtung gespült und gereinigt wird. Der Dampf-Flüssigkeitsmischer umfasst stromabwärts eines Durchflussraums, in den eine Dampfeinlassdüse mündet, eine Drosselstelle und stromabwärts der Drosselstelle einen Strahlbrecher, der aus einem quergerichteten, an beiden Enden offenen Hohlzapfen besteht. Der Innenraum des Hohlzapfens steht somit an den Zapfenenden mit der Außenluft in Verbindung sowie über ein Mantelloch in dem Hohlzapfen mit dem Inneren des Auslaufendes des Dampf-Flüssigkeitsmischers in Verbindung. Die um den Hohlzapfen strömende Milch erzeugt einen Unterdruck, der die Außenluft ejektorartig durch die beidseitigen Öffnungen des Hohlzapfens und durch dessen Mantelloch ansaugt. Das Mantelloch kann als Bypasslufteingang aufgefasst werden, der stromabwärts der Schäumkammer und der Drosselstelle in einen von der Schäumkammer wegführenden Kanal mündet. In diesen Bypasslufteingang wird kein Spülwasser von außen eingeleitet.

Der vorliegenden Erfindung liegt daher die Aufgabe zugrunde, andere Mittel zum Reinigen der Milchansaugleitung vorzuschlagen, die konstruktiv einfacher sind, bequem und ungefährlich gehandhabt werden können und gleichwohl eine wirksame Reinigung bzw. Spülung des Milchansaugschlauches gewährleisten. Diese Aufgabe wird erfindungsgemäß dadurch gelöst, dass in einer Kaffeemaschine mit einer Schäumvorrichtung, in der ein innerer Milchkanal zu einer Schäumkammer vorgesehen ist, in den ein Bypasslufteingang für eine zuschaltbare Luftzufuhr zu der Schäumvorrichtung mündet, dem Bypasslufteingang und damit dem inneren Milchkanal und der Milchansaugleitung über eine gesteuerte Ventilanordnung Spülwasser aus dem Durchlauferhitzer der Kaffeemaschine zugeführt werden kann, und dass ein Milchansaugende der Milchansaugleitung vor Spülwasserbeaufschlagung des Bypasslufteingangs mit einer Restwasserschale der Kaffeemaschine unmittelbar oder mittelbar fluidleitend verbindbar ist, wahrend das andere Ende der Milchansaugleitung an einen inneren Milchkanal zu der Schäumkammer angeschlossen ist und während des Reinigungsvorgangs bleibt.

Der in einer solchen Kaffeemaschine durchführbare Spülvorgang erfolgt gemäß dem Verfahren gemäß Anspruch 9 in bedienungsfreundlicher Weise dadurch, dass zum Spülen der beweglichen Milchansaugleitung, insbesondere eines Schlauchs, nachdem das aus dem Milchvorratsbehälter entfernte Milchansaugende der Milchansaugleitung mit einer Spülwasseraufnahme, insbesondere einer Restwasserschale der Kaffeemaschine verbunden worden ist, anschließend in den Bypasslufteingang der Schäumvorrichtung, der in den inneren Milchkanal der Schäumvorrichtung zu einer Schäumkammer in der Schäumvorrichtung mündet und an den andererseits die Milchansaugleitung angeschlossen ist, Spülwasser von außen eingeleitet wird. Hierzu ist der Bypasslufteingang einfach von einem Lufteinlass zu einer Quelle des Spülwassers, in der Regel Heißwasser aus dem Ausgang eines Durchlauferhitzers der Kaffeemaschine umschaltbar. Das Verbinden des

Milchansaugendes der Milchansaugleitung mit der Spülwasseraufnahme erfordert keine hohe Geschicklichkeit der Bedienungsperson, insbesondere wenn das Milchansaugende in einen Spülwasserablaufstutzen über der Restwasserschale gemäß Anspruch 3 einfach eingesteckt werden kann und dadurch in die Restwasserschale mündet. Die Spülwasseraufnahme bzw. Restwasserschale befindet sich auf einem niedrigen Temperaturniveau, so dass die Bedienungsperson nicht durch Verbrühungen gefährdet ist. Auch ist die Temperatur am Milchansaugende der Milchansaugleitung, die mit Spülwasser beaufschlagt wird, gegenüber dem mit der Schäumvorrichtung verbundenen Ende beim Spülen herabgesetzt.

Indem der Bypasslufteingang der Schäumvorrichtung in den inneren Milchkanal der Schäumvorrichtung mündet, der in der Schäumkammer endet, wird bei Beaufschlagung des Bypasslufteingangs mit dem Spülmedium, in der Regel heißes Spülwasser, nicht nur die Milchansaugleitung über einen ersten Abschnitt des inneren Milchkanals mit einem wesentlichen Teil des Spülwassers beaufschlagt, sondern ein Teil des Spülwassers strömt durch einen zweiten Abschnitt des inneren Milchkanals in die Schäumkammer und kann somit auch deren Innenflächen gleichzeitig mit der Milchansaugleitung spülen.

Die zum Reinigen der Schäumvorrichtung und der Milchansaugleitung vorgesehenen Mittel sind wenig aufwendig, insbesondere wenn für die Kaffeemaschine bzw. einen Espressovollautomaten ohnehin eine gesteuerte Ventilanordnung vorgesehen ist, die zu der vorgesehenen Reinigung der Schäumvorrichtung und der Milchansaugleitung lediglich zu erweitern ist. Die fluidleitende Verbindung des Milchansaugendes der Milchansaugleitung zu der Restwasserschale der Kaffeemaschine kann in einfacher Weise realisiert werden, indem das offene Milchansaugende über der Restwasserschale in diese mündet.

Zu einer sicheren, zuverlässigen Anbringung des Milchansaugendes der Milchansaugleitung ist dazu gemäß Anspruch 2 an einem Kaffeemaschinengehäuse ein Spülwasserablaufstutzen über der Restwasserschale angeordnet, so dass der Spülwasserablaufstutzen in die Restwasserschale mündet. Das Milchansaugende der Milchansaugleitung soll gemäß Anspruch 2 so ausgebildet sein, dass es mit diesem Spülwasserablaufstutzen gekuppelt werden kann oder nach Anspruch 3 einfach eingesteckt werden kann.

Um trotz der einfachen Bedienbarkeit der Mittel zum Reinigen der Schäumvorrichtung und der Milchansaugleitung mit Spülwasser die Wahrscheinlichkeit einer Fehlbedienung weiter herabzusetzen, ist gemäß Anspruch 4 eine Steuereinheit, mit der die gesteuerte Ventilanordnung steuerbar, d.h. zum Reinigen umschaltbar, ist, mit einer elektrischen Anzeige verbunden, die einen Befehl zum Verbinden des Milchansaugendes mit der Restwasserschale anzeigt, bevor die Spülwasserzufuhr zu dem Bypasslufteingang der Schäumvorrichtung aktiviert wird.

Darüber hinaus kann gemäß Anspruch 5 besonders vorteilhaft mit Sicherheit vermieden werden, dass Spülwasser über das nicht umgesteckte Milchansaugende der Milchansaugleitung in den Milchvorratsbehälter fließt, dadurch, dass an dem Spülwasserablaufstutzen ein durch Einstecken des Milchansaugendes der Milchansaugleitung betätigbarer Schalter oder Sensor angeordnet ist, über den die Spülwasserzufuhr zu dem Bypasslufteingang der Schäumvorrichtung aktiviert wird, wenn der Schalter oder Sensor das eingesteckte Milchansaugende erfasst. Der Schalter oder Sensor kann eine Pumpe einschalten, die kaltes Wasser zu dem Durchlauferhitzer der Kaffeemaschine pumpt, welches in dem Durchlauferhitzer erhitzt wird und als Spülwasser über die gesteuerte Ventilanordnung dem Bypasslufteingang zugeführt wird.

Besonders zweckmäßig wird nach Anspruch 6 ein zum Reinigen der Schäumvorrichtung und der Milchansaugleitung angepasstes Mehrwegventil, vorzugsweise ein Keramikventil nach Anspruch 7, als gesteuerte Ventilanordnung eingesetzt, welches zumindest einen mit einem Lufteinlass verbundenen Eingang, einen mit einem Durchlauferhitzerausgang verbundenen Eingang und einen mit dem Bypasslufteingang der Schäumvorrichtung verbundenen Ausgang aufweist.

Mit einem solchen Mehrwegventil bzw. Keramikventil erfolgt gemäß Anspruch 10 das Einleiten des Spülwassers in den Bypasslufteingang durch Umschalten des strömungsmäßig zwischen dem Bypasslufteingang einerseits sowie dem Lufteinlass und dem Ausgang eines Durchlauferhitzers andererseits angeordneten Keramikventils aus einer Ventilstellung, in der der Bypasslufteingang mit dem Lufteinlass verbunden ist, in eine Ventilstellung, in der der Bypasslufteingang mit dem Ausgang des Durchlauferhitzers verbunden ist, und wenn in diesen kaltes Wasser eingepumpt wird. Das in dem Durchlauferhitzer erhitzte Wasser wird dann weiter über einen Strömungsweg des Keramikventils und den Bypasslufteingang in die Schäumvorrichtung sowie über deren inneren Milchkanal in die Milchansaugleitung fließen

Zweckmäßig weist die gesteuerte Ventilanordnung, die als Mehrwegventil bzw. Keramikventil ausgebildet ist, gemäß Anspruch 8 weitere Ausgänge auf, mit der insbesondere der mit dem Durchlauferhitzer verbundene Eingang in Verbindung treten kann, nämlich ein Ausgang, der über eine Dampfleitung mit der Schäumvorrichtung verbunden ist, einen Ausgang, der über eine erste Heißwasserleitung mit einer Brüheinheit der Kaffeemaschine verbunden ist und einen Ausgang, der über eine zweite Heißwasserleitung mit einem externen Heißwasserauslass verbunden ist, um je nach Einstellung der Ventilanordnung Milchschaum, Kaffee aus diesem Cappuccino oder aber einfach nur heißes Wasser zu erzeugen, welches zum Aufbrühen von Tee oder Herstellung von Suppen aus Instantpulver in herkömmlicher Weise verwendet werden kann.

Zwei Varianten einer erfindungsgemäßen Kaffeemaschine sind nachfolgend anhand einer Zeichnung mit vier Figuren beschrieben, woraus sich weitere vorteilhafte Einzelheiten der Erfindung ergeben können. Es zeigen:
- Figur 1: grob schematisch eine Darstellung der Funktionselemente der Kaffeemaschine mit den Mitteln zum Reinigen einer Schäumvorrichtung und einer Milchansaugleitung der Kaffeemaschine,
- Figur 2a: eine Einzelheit in einem ausgeschnittenen Bereich einer Restwasserschale der Kaffeemaschine in einer ersten Variante,
- Figur 2b: eine Darstellung gemäß Figur 2a, jedoch in einer zweiten Variante,
- Figur 3: ein Keramikventil in fünf Ventilstellungen mit zugehörigen Verbindungsschemata und
- Figur 4: eine einfache schaubildliche Darstellung der Kaffeemaschine, welche die Mittel zum Reinigen der in ihr enthaltenen Schäumvorrichtung und eines Milchansaugschlauchs umfasst.

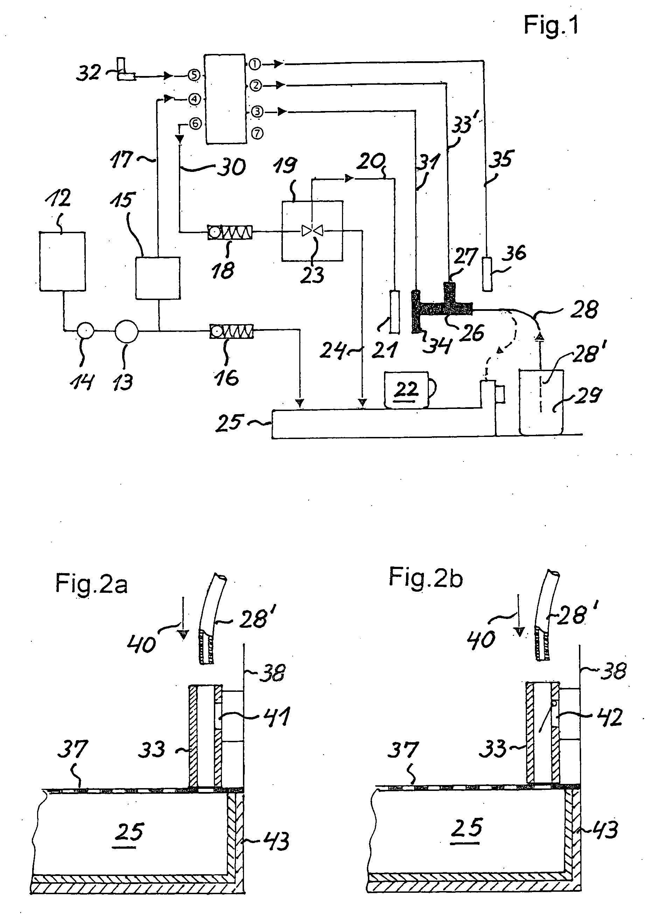

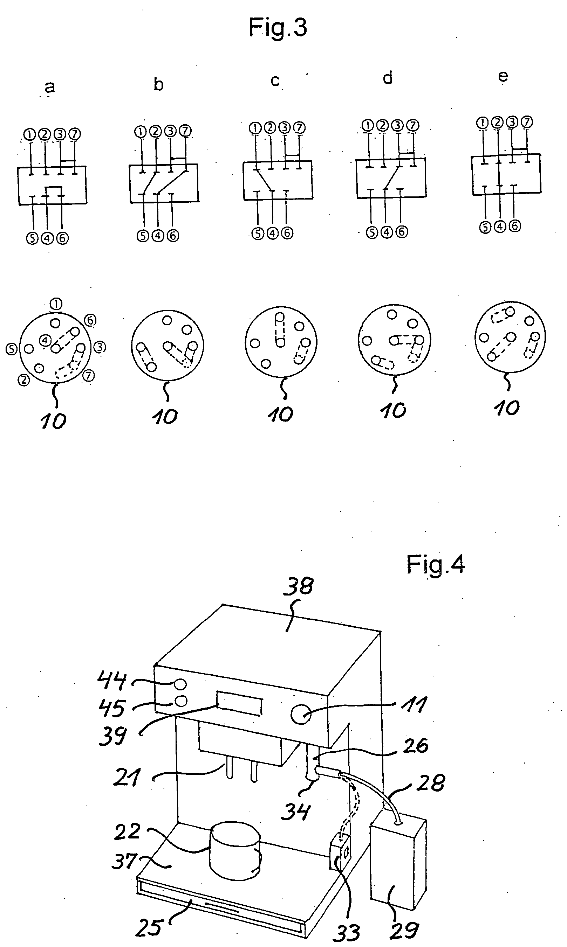

Die in der Zeichnung, insbesondere den Figuren 1, 3 und 4, dargestellte Kaffeemaschine umfasst Komponenten für eine normale Kaffee- und Milchschaumzubereitung, die zusammen mit ihren Funktionen beschrieben werden:
Zu der Kaffeemaschine gehört ein Keramikventil 10 mit einer gegenüber einem Keramikventil einer üblichen Kaffeemaschine erweiterten Funktion bzw. Stellung, wobei alle einstellbaren Stellungen in Figur 3 dargestellt sind. Zu dem Keramikventil 10 gehören Keramikventilein-/ausgänge 1-7, die im Einzelnen weiter unten spezifiziert sind. Die obere Reihe in Figur 3 zeigt Verbindungsschemata a, b, c, d, e, die zu den fünf verschiedenen Stellungen des Keramikventils 10 gemäß der unteren Reihe in Figur 3 gehören. Die Stellungen des Keramikventils 10 werden durch einen Wahlschalter 11 an der Frontseite der Kaffeemaschine, siehe Figur 4, eingestellt.

Zu einer üblichen Kaffeezubereitung befindet sich das Keramikventil 10 in der Stellung a gemäß Figur 4, wie weiter unten erläutert.

Unter anderem zu der Kaffeezubereitung wird aus einem Wasserbehälter 12, der Kaltwasser enthält, mittels einer Pumpe 13 über einen Durchflussmesser 14 eine vorbestimmte Menge Kaltwasser durch einen Durchlauferhitzer 15 gefördert und von einem nicht bezeichneten Ausgang des Durchlauferhitzers weiter in eine Heißwasser-/Dampfleitung 17 zu einem Eingang 4 des Keramikventils 10. In dem Keramikventil 10 ist für die Kaffeezubereitung eine Verbindung 4-6 zu dem Ausgang 6 durchgeschaltet, so dass das Heißwasser aus dem Durchlauferhitzer 15 über eine Heißwasserleitung 30 und ein Gegendruckventil 18 in eine Brüheinheit 19 fließt. Aus der Brüheinheit 19 kann der darin aufgebrühte Kaffee über eine Kaffeeleitung 20 und einen Kaffeeauslass 21 in eine Kaffeetasse 22 abgegeben werden. Ein Drainageventil 23 öffnet nach dem Kaffeezubereitungsvorgang, wodurch Restwasser über eine Drainageleitung 24 in eine Restwasserschale 25 abfließt.

Zu der Restwasserschale führt auch eine nicht bezeichnete Leitung mit einem Entlastungsventil 16 von dem Ausgang der Wasserpumpe 13.

Zur Cappuccinozubereitung und generell Milchaufschäumung ist eine Schäumeinheit 26 vorgesehen, die einen Bypasslufteingang 27, einen inneren Milchkanal und eine Schäumkammer umfasst, die nach dem Venturiprinzip ausgebildet ist und Unterdruck erzeugt. Der innere Milchkanal und die Schäumkammer sind in den Figuren nicht dargestellt. Der Bypasslufteingang 27 mündet in den inneren Milchkanal, der einerseits zu der Schäumkammer geöffnet ist und an den andererseits eine schlauchförmige Milchansaugleitung 28 fest angeschlossen ist. Zur Milchaufschäumung bzw. Cappuccinozubereitung mündet die flexible Milchansaugleitung 28 in einen Milchvorratsbehälter 29, wie in Figur 1 mit einer durchgezogenen Linie dargestellt. Zur Milchaufschäumung wird die Schäumvorrichtung 26 mit in dem Durchlauferhitzer 15 bereiteten Dampf beaufschlagt, wozu die Wasserführung bis zu dem Durchlauferhitzer 15 wie oben zu der Kaffeezubereitung erfolgt. Der in dem Durchlauferhitzer Heißwasser Dampfer 15 erzeugte Dampf fließt über die Heißwasser-/Dampfleitung 17 an den Eingang 4 des Keramikventils 10, in dem für die Milchaufschäumung Verbindungen 4-7/3 durchgeschaltet sind, wodurch der Dampf über eine Dampfleitung 31 in die Schäumvorrichtung 26 strömt. In der Schäumvorrichtung 26 wird durch Venturieffekt in der Schäumkammer Milch aus dem Milchvorratsbehälter 29 über die hierin eingeführte Milchansaugleitung 28 angesaugt. Da zum Aufschäumen die in dem inneren Milchkanal der Schäumvorrichtung strömende Milch mit Luft zu durchsetzen ist, wird für die Zuführung der Luft in dem Keramikventil 10 zusätzlich zu der Dampfwegdurchschaltung, die oben erwähnt ist, ein Luftweg 5-2 durchgeschaltet. Dadurch kann die in dem inneren Milchkanal der Schäumvorrichtung 26 strömende Milch über den Bypasslufteingang 27 Luft ansaugen, die über einen Lufteinlass 32, den in dem Keramikventil 10 freigeschalteten Luftweg 5-2 in eine Luftverbindungsleitung 33' gelangt. Der somit in der Schäumvorrichtung 26 entstehende Milchschaum fließt über einen Milchschaumauslass 34 aus der Schäumvorrichtung 26. Die oben erwähnte Luftwegdurchschaltung 5-2 und die oben erwähnte Dampfverbindung 4-7/3 in dem Keramikventil 10 sind in Figur 3 unter b dargestellt.

Eine Heißmilchzubereitung erfolgt bei einer Schaltstellung des Keramikventils 10 gemäß b unter Figur 3, ähnlich wie die Milchschaumzubereitung, wobei lediglich die Durchschaltung des Luftweges 5-2 in dem Keramikventil 10 entfällt.

Für eine einfache Heißwasserzubereitung wird das Wasser bis zu dem Keramikventileingang 4, wie oben für die Kaffeezubereitung erläutert, geleitet. In dem Keramikventil 10 ist hierzu weiter der Weg 4-1 durchgeschaltet, so dass das Heißwasser über eine Heißwasserleitung 35 in einen Heißwasserauslass 36 strömt. Die Keramikventilstellung für die Heißwasserzubereitung ist in Figur 3 unter c dargestellt.

Eine allfällige Spülung der Milchwege, sowohl der Schäumvorrichtung 26 als auch der Milchansaugleitung 28, erfolgt mit Spülwasser, welches wie das Heißwasser für die obige einfache Heißwasserzubereitung an den Eingang 4 des Keramikventils 10 geleitet wird, dann jedoch über den in dem Keramikventil 10 durchgeschalteten Weg 4-2 und über die Luftverbindungsleitung 33 in den Bypasslufteingang 27 der Schäumvorrichtung 26 strömt. Zuvor wurde das Milchansaugende 28' aus dem Milchvorratsbehälter 29 entnommen und in einen Spülwasserablaufstutzen 33 gesteckt, der über der Restwasserschale 25, die mit einem Schalendeckel 37 teilweise abgedeckt ist, angebracht ist, wobei der Schalendeckel 37 einen festen Bestandteil des Kaffeemaschinengehäuses 38 bilden kann. Der Spülwasserablaufstutzen 33' steht mit dem Inneren der Restwasserschale 25 in fluidleitender Verbindung.

Wenn das Milchansaugende 28' der Milchansaugleitung 28 in dem Spülwasserablaufstutzen 33 in Richtung des Pfeils 40 eingesteckt ist, kann die Spülwasserzufuhr zu der Schäumvorrichtung 26 durch Einschalten der Wasserpumpe 13 aktiviert werden, wonach das Spülwasser sowohl durch die Schäumvorrichtung 26 als auch durch die Milchansaugleitung 28 in die Restwasserschale 25 fließen kann.

Um eine Bedienungsperson der Kaffeemaschine aufzufordern, vor Aktivierung des Spülvorgangs das Milchansaugende 28' in den Spülwasserablaufstutzen 33 zu stecken, wird nach Einstellung des Wahlschalters 11 auf einer elektrischen Anzeige 39 an der Vorderfront der Kaffeemaschine, siehe Figur 4, ein entsprechender Befehl angezeigt.

Um sicherzustellen, dass keinesfalls eine Fehlaktivierung der Spülwasserzufuhr in die Schäumvorrichtung 26 und in die Milchansaugleitung 28 erfolgt, wenn deren Milchansaugende 28' noch nicht in den Spülwasserablaufstutzen 33 steckt, ist an dem Spülwasserablaufstutzen 33 entweder ein Sensor 41, siehe Figur 2a, oder ein Schalter 42, und zwar ein Mikroschalter, siehe Figur 2b, so angeordnet, dass er durch das in Pfeilrichtung 40 eingesteckte Milchansaugende 28' der Milchansaugleitung 28 betätigt wird, um erst bei Betätigung die Spülwasserzufuhr zu der Schäumvorrichtung 26 und der Milchansaugleitung 28 durch Stromzufuhr zu der Wasserpumpe 13 einzuleiten und aufrechtzuerhalten. Wie aus Figur 4 in Verbindung mit den Figuren 2a und 2b ersichtlich, ist die Restwasserschale 25 als Schublade ausgebildet, so dass sie zur Entleerung aus einem Gehäusesockel 43 der Kaffeemaschine herausgezogen werden kann. Dabei bleibt der Spülwasserablaufstutzen 33 fest mit dem Schalendeckel 37 bzw. dem Kaffeemaschinengehäuse 38 verbunden.

Aus Figur 4 sind ferner an der Frontseite des Kaffeemaschinengehäuses 38 ein Netzschalter 44 und ein Startschalter 45 ersichtlich, mit dem jeweils eine der oben beschriebenen möglichen Funktionen, die mit dem Wahlschalter 11 ausgewählt wird, aktiviert werden kann.

### Bezugszahlenliste

- 1 - 7: Keramikventilein-/ausgänge
- 10: Keramikventil
- 11: Wahlschalter
- 12: Wasserbehälter
- 13: Wasserpumpe
- 14: Durchflussmesser
- 15: Durchlauferhitzer
- 16: Entlastungsventil
- 17: Heißwasser-/Dampfleitung
- 18: Gegendruckventil
- 19: Brüheinheit
- 20: Kaffeeleitung
- 21: Kaffeeauslass
- 22: Kaffeetasse
- 23: Drainageventil
- 24: Drainageleitung
- 25: Restwasserschale
- 26: Schäumvorrichtung
- 27: Bypasslufteingang
- 28: Milchansaugleitung
- 28': Milchansaugende
- 29: Milchvorratsbehälter
- 30: Heißwasserleitung
- 31: Dampfleitung
- 32: Lufteinlass
- 33: Spülwasserablaufstutzen
- 33': Luftverbindungsleitung
- 34: Milchschaumauslass
- 35: Heißwasserleitung
- 36: Heißwasserauslass
- 37: Schalendeckel
- 38: Kaffeemaschinengehäuse
- 39: elektrische Anzeige
- 40: Pfeil
- 41: Sensor
- 42: Schalter
- 43: Gehäusesockel
- 44: Netzschalter
- 45: Startschalter

## Patentansprüche

1. Kaffeemaschine, insbesondere Espressovollautomat, mit einer Schäumvorrichtung (26), einer gesteuerten Ventilanordnung (10), einem Bypasslufteingang (27) und einer Milchansaugleitung (28), wobei in der Schäumvorrichtung (26) ein innerer Milchkanal zu einer Schäumkammer vorgesehen ist, in die der Bypasslufteingang (27) für eine zuschaltbare Luftzufuhr zu der Schäumvorrichtung (26) mündet und an die die bewegliche Milchansaugleitung (28) zu einem Milchvorratsbehälter (29) angeschlossen ist, deren Milchansaugende (28') zur Milchschaumbereitung in den Milchvorratsbehälter (29) eingesteckt ist, und wobei Mittel zum Reinigen der Schäumvorrichtung (26) und der Milchansaugleitung (28) mit Spülwasser aus einem Durchlauferhitzer (15) der Kaffeemaschine vorgesehen sind,
wobei
dem Bypasslufteingang (27) der Schäumvorrichtung (26) und darüber dem inneren Milchkanal, der Milchansaugleitung (28) und derem Milchansaugende (28') über die gesteuerte Ventilanordnung (10) Spülwasser aus dem Durchlauferhitzer (15) zuführbar ist und wobei das Milchansaugende (28') der Milchansaugleitung (28) vor Beaufschlagung des Bypasslufteingangs (27) mit Spülwasser mit einer Restwasserschale (25) der Kaffeemaschine unmittelbar oder mittelbar fluidleitend verbindbar ist.

2. Kaffeemaschine nach Anspruch 1,
**dadurch gekennzeichnet,**
**dass** in die Restwasserschale (25) ein an einem Kaffeemaschinengehäuse (38) angeordneter Spülwasserablaufstutzen (33) mündet, mit dem das Milchansaugende (28') der Milchansaugleitung (28) kuppelbar ist.

3. Kaffeemaschine nach Anspruch 2,
**dadurch gekennzeichnet, dass** das Milchansaugende (28') der Milchansaugleitung (28) in den Spülwasserablaufstutzen (33) einsteckbar ist.

4. Kaffeemaschine nach einem der vorangehenden Ansprüche,
**dadurch gekennzeichnet,**
**dass** eine Steuereinheit vorgesehen ist, mit der die gesteuerte Ventilanordnung (10) steuerbar ist, und
**dass** die Steuereinheit mit einer elektrischen Anzeige (39) verbunden ist, die geeignet ist, einen Milchansaugendeverbindungsbefehl mit der Restwasserschale (25) vor Aktivierung der Spülwasserzufuhr zu dem Bypasslufteingang (27) der Schäumvorrichtung (26) anzuzeigen.

5. Kaffeemaschine nach Anspruch 3,
**dadurch gekennzeichnet,**
**dass** an dem Spülwasserablaufstutzen (33) ein durch Einstecken des Milchansaugendes (28') der Milchansaugleitung (28) betätigbarer Schalter (42) oder Sensor (41) angeordnet ist, über den die Spülwasserzufuhr zu dem Bypasslufteingang (27) der Schäumvorrichtung (26) aktivierbar ist.

6. Kaffeemaschine nach einem der vorangehenden Ansprüche,
**dadurch gekennzeichnet,**
**dass** die gesteuerte Ventilanordnung (10) als Mehrwegventil ausgebildet ist, welches einen mit einem Lufteinlass (32) verbundenen Eingang (5), einen mit einem Ausgang des Durchlauferhitzers (15) verbundenen Eingang (4) und einen mit dem Bypasslufteingang (27) der Schäumvorrichtung (26) verbundenen Ausgang (2) umfasst.

7. Kaffeemaschine nach Anspruch 6,
**dadurch gekennzeichnet,**
**dass** das Mehrwegventil ein Keramikventil (10) ist.

8. Kaffeemaschine nach Anspruch 6 oder 7,
**dadurch gekennzeichnet,**
**dass** die gesteuerte Ventilanordnung (10) weiterhin einen Ausgang (3), der über eine Dampfleitung (31) mit der Schäumvorrichtung (26) verbunden ist, einen Ausgang (6), der über eine erste Heißwasserleitung (30) mit einer Brüheinheit (19) der Kaffeemaschine verbunden ist, und einen Ausgang (1), der über eine zweite Heißwasserleitung (35) mit einem Heißwasserauslass (36) verbunden ist, umfasst.

9. Verfahren zum Spülen einer an eine Schäumvorrichtung insbesondere einer Kaffeemaschine angeschlossenen beweglichen Milchansaugleitung (28) mit einem Milchansaugende (28'), das zur Milchschaumbereitung in einem Milchvorratsbehälter (29) eingesteckt ist und zum Spülen aus dem Milchvorratsbehälter (29) entfernt wird, wobei zum Spülen das aus dem Milchvorratsbehälter (29) entfernte Milchansaugende (28') der Milchansaugleitung (28) mit einer Restwasserschale (25) der Kaffeemaschine, verbunden wird,
wobei
anschließend in einen Bypasslufteingang (27) der Schäumvorrichtung (26), der in einen inneren Milchkanal der Schäumvorrichtung (26) zu einer Schäumkammer in der Schäumvorrichtung (26) mündet und an den die Milchansaugleitung (28) angeschlossen ist, Spülwasser eingeleitet wird, wonach das Spülwasser sowohl durch die Schäumvorrichtung (26) als auch durch die Milchansaugleitung (28) in die Restwasserschale (25) fließen kann.

10. Verfahren nach Anspruch 9,
**dadurch gekennzeichnet,**
**dass** das Einleiten des Spülwassers in den Bypasslufteingang (27) durch Umschalten eines strömungsmäßig zwischen dem Bypasslufteingang (27) einerseits sowie einem Lufteinlass (32) und einem Ausgang eines Durchlauferhitzers (15) andererseits angeordneten Keramikventils (10) aus einer Ventilstellung, in der der Bypasslufteingang (27) mit dem Lufteinlass (32) verbunden ist, in eine Ventilstellung, in der der Bypasslufteingang (27) mit dem Ausgang des Durchlauferhitzers (15) verbunden ist, und Zufuhr von Wasser in einen Eingang des Durchlauferhitzers (15) erfolgt.

## Claims

1. A coffee machine, in particular a fully automatic espresso machine, having a foaming device (26), a controlled valve arrangement (10), a bypass air inlet (27) and a milk suction tube (28), an inner milk channel to a foaming chamber being provided in the foaming device (26), said bypass air inlet (27) opening into the foaming chamber for supplying air in a switchable manner to said foaming device (26) and said movable milk suction tube (28), which is connected to a milk storage container (29), being connected to said foaming chamber, a milk suction end (28') of the milk suction tube (28) being inserted into the milk storage container (29) for the preparation of milk foam, and means for cleaning the foaming device (26) and the milk suction tube (28) being provided with rinsing water from an instantaneous water heater (15) of the coffee machine, wherein
rinsing water from the instantaneous water heater (15) can be supplied to the bypass air inlet (27) of the foaming device (26) and, via the bypass air inlet (27), to the inner milk channel, the milk suction tube (28) and its milk suction end (28') by means of the controlled valve arrangement (10) and said milk suction end (28') of the milk suction tube (28) being capable of being connected directly or indirectly to a residual water tray (25) of the coffee machine in a fluid-conducting manner prior to the application of rinsing water to the bypass air inlet (27).

2. The coffee machine according to claim 1,
**characterized in that**
a rinsing-water discharge nozzle (33) that is mounted on a coffee machine housing (38) opens into the residual water tray (25), the milk suction end (28') of the milk suction tube (28) being able to be coupled to the rinsing-water discharge nozzle.

3. The coffee machine according to claim 2,
**characterized in that**
the milk suction end (28') of the milk suction tube (28) can be inserted into the rinsing-water discharge nozzle (33).

4. The coffee machine according to any one of the preceding claims,
**characterized in that**
a control unit that can control the controlled valve arrangement is provided and
that the control unit is connected to an electronic display (39) that is suitable for displaying a milk-suction-end connection command with the residual water tray (25) prior to activating the rinsing-water supply to the bypass air inlet (27) of the foaming device (26).

5. The coffee machine according to claim 3,
**characterized in that**
a switch (42) or sensor (41) which can be operated by inserting the milk suction end (28') of the milk suction tube (28) is located on the rinsing-water discharge nozzle (33), the rinsing-water supply to the bypass air inlet (27) of the foaming device (26) being able to be activated via said switch (42) or sensor (41).

6. The coffee machine according to any one of the preceding claims,
**characterized in that**
the controlled valve arrangement (10) is designed as a multiport valve which comprises an inlet (5) connected to an air inlet (32), an inlet (4) connected to an outlet of the instantaneous water heater (15), and an outlet (2) connected to the bypass air inlet (27) of the foaming device (26).

7. The coffee machine according to claim 6,
**characterized in that**
the multiport valve is a ceramic valve (10).

8. The coffee machine according to claim 6 or 7,
**characterized in that**
the controlled valve arrangement (10) further comprises an outlet (3) that is connected to the foaming device (26) via a steam pipe (31); an outlet (6) that is connected to a brewing unit (19) of the coffee machine via a first hot water pipe (30); and an outlet (1) that is connected to a hot water outlet (36) via a second hot water pipe (35).

9. A method for rinsing an movable milk suction tube (28) which has a milk suction end (28') and is connected to a foaming device, in particular of a coffee machine, said milk suction end (28') being inserted into a milk storage container (29) for the preparation of milk foam, and being removed from the milk storage container (29) for rinsing, wherein
the milk suction end (28') of the milk suction tube (28) removed from the milk storage container (29) is connected to a residual water tray (25) of the coffee machine for rinsing,
wherein
rinsing water is subsequently supplied into a bypass air inlet (27) of the foaming device (26) which opens into an inner milk channel of the foaming device (26) to a foaming chamber in the foaming device (26) and to which the milk suction tube (28) is connected, after which the rinsing water can flow into the residual water tray (25) through the foaming device (26) as well as through the milk suction tube (28).

10. The method according to claim 9,
**characterized in that**
the rinsing water is supplied into the bypass air inlet (27) by switching a ceramic valve (10), that is arranged in a fluidic manner between the bypass air inlet (27) on the one hand and an air inlet (32) and an outlet of an instantaneous water heater (15) on the other hand, from a valve position in which the bypass air inlet (27) is connected to the air inlet (32) into a valve position in which the bypass air inlet (27) is connected to the outlet of the instantaneous water heater (15), and water is supplied into an inlet of the instantaneous water heater (15).

## Revendications

1. Machine à café, notamment une machine à expresso entièrement automatique, comprenant un dispositif de moussage (26), un ensemble de soupape (10) réglé, une entrée d'air de dérivation (27) et un conduit d'aspiration de lait (28), un canal de lait interne menant à une chambre de moussage étant prévu dans le dispositif de moussage (26), l'entrée d'air de dérivation (27) aboutissant à ladite chambre de moussage en vue d'une alimentation en air raccordable du dispositif de moussage (26) et le conduit d'aspiration de lait (28) mobile étant relié à un réservoir de lait (29) étant raccordé à ladite chambre de moussage, l'extrémité d'aspiration de lait (28') du conduit d'aspiration de lait (28) étant insérée dans le réservoir de lait (29) en vue de la préparation du mousse de lait, et des moyens pour nettoyer le dispositif de moussage (26) et le conduit d'aspiration de lait (28) par de l'eau de rinçage à partir d'un chauffe-eau instantané (15) de la machine à café étant prévus,
dans laquelle
l'entrée d'air de dérivation (27) du dispositif de moussage (26) et, par celui-ci, le canal de lait interne, le conduit d'aspiration de lait (28) et son extrémité d'aspiration de lait (28') peuvent être alimentés en eau de rinçage à partir du chauffe-eau instantané (15) par l'ensemble de soupape (10) réglé et dans laquelle l'extrémité d'aspiration de lait (28') du conduit d'aspiration de lait (28) peut être relié directement ou indirectement en communication de fluide à un bac de récupération d'eau (25) de la machine à café avant l'alimentation de l'entrée d'air de déviation (27) en eau de rinçage.

2. Machine à café selon la revendication 1,
**caractérisée en ce qu'**
un raccord d'évacuation d'eau de rinçage (33) disposé sur un boîtier (38) de la machine à café aboutit au bac de récupération d'eau (25), l'extrémité d'aspiration de lait (28') du conduit d'aspiration de lait (28) pouvant être couplée audit raccord.

3. Machine à café selon la revendication 2,
**caractérisée en ce que**
l'extrémité d'aspiration de lait (28') du conduit d'aspiration de lait (28) peut être insérée dans le raccord d'évacuation d'eau de rinçage (33).

4. Machine à café selon l'une quelconque des revendications précédentes,
**caractérisée en ce qu'**
une unité de réglage est prévue par laquelle l'ensemble de soupape (10) réglé peut être réglé, et
**en ce que** l'unité de réglage est reliée à un affichage électrique (39) qui est apte à afficher une commande de liaison de l'extrémité d'aspiration de lait au bac de récupération d'eau (25) avant l'activation de l'alimentation en eau de rinçage de l'entrée d'air de dérivation (27) du dispositif de moussage (26).

5. Machine à café selon la revendication 3,
**caractérisée en ce qu'**
un commutateur (42) ou un capteur (41) qui est actionnable en insérant l'extrémité d'aspiration de lait (28') du conduit d'aspiration de lait (28) et par lequel l'alimentation en eau de rinçage de l'entrée d'air de dérivation (27) du dispositif de moussage (26) peut être activée est disposé sur le raccord d'évacuation d'eau de rinçage (33).

6. Machine à café selon l'une quelconque des revendications précédentes,
**caractérisée en ce que**
l'ensemble de soupape (10) réglé est configuré comme soupape à plusieurs voies qui comprend une entrée (5) reliée à une admission d'air (32), une entrée (4) reliée à une sortie du chauffe-eau instantané (15) et une sortie (2) reliée à l'entrée d'air de dérivation (27) du dispositif de moussage (26).

7. Machine à café selon la revendication 6,
**caractérisée en ce que**
la soupape à plusieurs voies est une soupape (10) céramique.

8. Machine à café selon la revendication 6 ou la revendication 7,
**caractérisée en ce que**
l'ensemble de soupape (10) réglé comprend en outre une sortie (3) qui est reliée au dispositif de moussage (26) par une conduit de vapeur (31), une sortie (6) qui est reliée à une unité de percolation (19) de la machine à café par un premier conduit d'eau chaude (30), et une sortie (1) qui est reliée à une sortie d'eau chaude (36) par un deuxième conduit d'eau chaude (35).

9. Procédé de rinçage d'un conduit d'aspiration de lait (28) mobile qui est raccordé à un dispositif de moussage, notamment d'une machine à café, et qui comprend une extrémité d'aspiration de lait (28') qui est insérée dans un réservoir de lait (29) en vue de la préparation du mousse de lait et retirée du réservoir de lait (29) afin d'être rincée, l'extrémité d'aspiration de lait (28') du conduit d'aspiration de lait (28) retirée du réservoir de lait (29) étant reliée à un bac de récupération d'eau (25) de la machine à café afin d'être rincée,
dans lequel
de l'eau de rinçage est introduite dans une entrée d'air de dérivation (27) du dispositif de moussage (26) qui aboutit à un canal de lait interne du dispositif de moussage (26) menant à une chambre de moussage dans le dispositif de moussage (26) et à laquelle le conduit d'aspiration de lait (28) est raccordé, après quoi l'eau de rinçage peut couler dans le bac de récupération d'eau (25) à travers le dispositif de moussage (26) et à travers le conduit d'aspiration de lait (28).

10. Procédé selon la revendication 9,
**caractérisé en ce que**
l'introduction de l'eau de rinçage dans l'entrée d'air de dérivation (27) est effectuée en commutant une soupape (10) céramique, qui est disposée en communication fluide entre l'entrée d'air de dérivation (27) d'un côté et une admission d'air (32) et une sortie d'un chauffe-eau instantané (15) de l'autre côté, d'une position de soupape dans laquelle l'entrée d'air de dérivation (27) est reliée à l'admission d'air (32) à une position de soupape dans laquelle l'entrée d'air de dérivation (27) est reliée à la sortie due chauffe-eau instantané (15) et en introduisant de l'eau dans une entrée du chauffe-eau instantané (15).
